# EUROPEAN PATENT APPLICATION

(11) **EP 1 357 137 A1**
(43) Date of publication of application: **29.10.2003**
(21) Application number: 02076659.8
(22) Date of filing: 26.04.2002
(51) Int. Cl.: C08F 10/06

(54) **Syndiotactic polypropylene for rotomoulding**

(71) Applicant: ATOFINA Research, 7181 Seneffe (Feluy) (BE)
(72) Inventor: Maziers, Eric, 7180 Seneffe (BE); Smits, Valérie, 6540 Lobbes (BE)

(57) **Abstract**

The present invention is concerned with single layer articles produced by rotomoulding and consisting essentially of metallocene-produced syndiotactic polypropylene.

## Description

The present invention is concerned with rotomoulded articles prepared with syndiotactic polypropylene and having a high contact transparency and a high impact resistance at room temperature.

Rotomoulding is used for the manufacture of simple to complex, hollow plastic products. It can be used to mould a variety of materials such as polyethylene, polypropylene, polycarbonate or PVC. Linear low density polyethylene is preferably used.

These materials however suffer from high shrinkage and warping and for some applications, from their whiteness in their natural state.

Plastoelastomeric compositions such as described in US-5,457,159 can also be used in rotomoulding, but they require complex processing steps of mixing and vulcanisation.

US-6,124,400 discloses the use for rotomoulding of polymer alloys containing semi-crystalline polyolefin sequences with chains of different controlled microstructure prepared in a "one-pot" polymerisation process from a single monomer. The polymerization of these polymer alloys requires a complex catalyst system comprising organometallic catalyst precursors, cationic forming cocatalysts and cross-over agents.

There is thus a need for rotomoulded articles that do not suffer from these drawbacks.

It is an aim of the present invention to prepare rotomoulded articles with low shrinkage.

It is a further aim of the present invention to prepare rotomoulded articles having good contact transparency.

It is also an aim of the present invention to produce rotomoulded articles with very little warping.

It is another aim of the present invention to prepare rotomoulded articles having impact strength and ease of processing.

It is yet a further aim of the present invention to prepare rotomoulded articles that resist gamma irradiation.

Accordingly, the present invention discloses single layer articles produced by rotomoulding and consisting essentially of metallocene-produced syndiotactic polypropylene.

The syndiotactic polypropylene used in the present invention has a melt index of from 3 to 40 g/10 min and preferably of from 10 to 20 g/10 min.

The melt index MI2 is measured using the procedures of standard test ASTM D 1238 at 190 °C and under a load of 2.16 kg.

The metallocene used to prepare the syndiotactic polypropylene can be any bridged metallocene known in the art, represented by the general formula:

I. (C₅R'ₖ)_{g} R"ₛ (C₅R'ₖ) MQ_{3-g}

II. R"ₛ(C₅R'ₖ)₂ MQ'

wherein (C₅R'ₖ) is a cyclopentadienyl or substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a C₄-C₆ ring; R" is a structural bridge between the two (C₅R'ₖ) rings to impart stereorigidity that can be a C₁-C₄ alkylene radical, a dialkyl germanium or silicon or siloxane, or a alkyl phosphine or amine radical; Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other, Q' is an alkylidene radical having from 1 to about 20 carbon atoms, s is 0 or 1, g is 0, 1 or 2, s is Q when g is 0, k is 4 when s is 1 and k is 5 when s is 0, and M is a group Ivb, Vb or Vb transition metal. Preferred metals are Zr, Ti, Hf.

Among the preferred metallocenes used in the present invention, one can cite among others bis tetrahydro-indenyl compounds and bis indenyl compounds as disclosed for example in WO 96/35729, or bis (n-butyl-cyclopentadienyl) compounds. The most preferred metallocene catalyst is ethylene bis (4,5,6,7-tetrahydro-1-indenyl) zirconium dichloride.

The metallocene may be supported according to any method known in the art. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

The addition on the support, of an agent that reacts with the support and has an ionising action, creates an active site.

Preferably, alumoxane is used to ionize the catalyst during the polymerization procedure, and any alumoxane known in the art is suitable.

The preferred alumoxanes comprise oligomeric linear and/or cyclic alkyl alumoxanes represented by the formula : 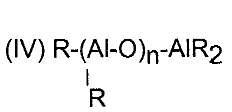 for oligomeric, linear alumoxanes and 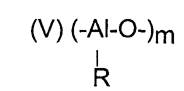 for oligomeric, cyclic alumoxanes,
wherein n is 1-40, preferably 10-20, m is 3-40, preferably 3-20 and R is a C₁-C₈ alkyl group and preferably methyl.
Methylalumoxane is preferably used.

One or more aluminiumalkyl(s) can be used as cocatalyst in the reactor. The aluminiumalkyl is represented by the formula AIRₓ can be used wherein each R is the same or different and is selected from halides or from alkoxy or alkyl groups having from 1 to 12 carbon atoms and x is from 1 to 3. Especially suitable aluminiumalkyl are trialkylaluminium, the most preferred being triisobutylaluminium (TIBAL).

Further, the catalyst may be prepolymerised prior to introducing it in the reaction zone and/or prior to the stabilization of the reaction conditions in the reactor.

The polymerisation of the metallocene-produced polypropylene can be carried out in gas, solution or slurry phase. Slurry polymerisation is used to prepare the medium and high density polypropylene. Gas phase polymerisation is preferred to prepare low density polyethylene. Solution polymerisation is preferred for the production of very low density polypropylene. The polymerisation temperature ranges from 20 to 125°C, preferably from 60 to 95°C and the pressure ranges from 0.1 to 5.6 Mpa, preferably from 2 to 4 Mpa, for a time ranging from 10 minutes to 4 hours, preferably from 1 and 2.5 hours.

A continuous single loop reactor is preferably used for conducting the polymerisation under quasi steady state conditions.

The average molecular weight is controlled by adding hydrogen during polymerisation. The relative amounts of hydrogen and olefin introduced into the polymerisation reactor are from 0.001 to 15 mole percent hydrogen and from 99.999 to 85 mole percent olefin based on total hydrogen and olefin present, preferably from 0.2 to 3 mole percent hydrogen and from 99.8 to 97 mole percent olefin.

The rotomoulding machine can be any one of the machines generally used in the field such as for example the CACCIA 1400R rotational moulding machine.

The rotomoulded syndiotactic polypropylene articles according to the present invention are characterised by an excellent contact transparency. They also exhibit very low shrinkage and warping. They have excellent flexural yield strength and flexural properties. In addition, they offer a good resistance to γ irradiation. They further have the good sealing ability of sPP resins while maintaining good impact strength at room temperature. Additionally, the production cycling time of the sPP resins is comparable to that of polyethylene resins currently used in rotomoulding.

The impact strength is measured at room temperature and following the method of standard test ASTM 30-29.

Flexural yield strength and flexural modulus are measured following the method of standard test ASTM D-790 M

The metallocene-produced sPP can be used to produce rotomoulded articles in a variety of applications such as for example tanks, containers, toys, boats, furniture, medical applications.

### Examples.

Several metallocene-produced syndiotactic polypropylene resins have been tested and compared to a reference polyethylene in the rotomoulding industry.

Resins R1 and R2 are syndiotactic polypropylene resins prepared with a metallocene catalyst system comprising isopropyl (cyclopentadienyl) (fluorenyl) zirconium dichloride and following the method described in EP-351,392.

### Resin R3.

Resin R3 is a commercial polyethylene sold under the name Rigidex® 3560 UA by BP.

The properties of these three resins are summarised in Table I.

**Table I**

| Resin | R1 | R2 | R3 |
|---|---|---|---|
| Density g/cm³ ASTM D-1505 | n.a. | n.a. | 0.9375 |
| MI2 g/10 min (190 °C) | n.a. | n.a; | 8 |
| MI2 g/10 min (230 °C) | 10 | 20 | n.a. |
| n.a. means not applicable | | | |

All test mouldings were carried out on the CACCIA 1400R rotational moulding machine having the following specifications:
- Shuttle-style machine
- Offset arm
- LPG burner arm
- Burner capacity of 7700 Kcal/hr
- Air fan cooling
- Maximum plate diameter of 950 mm.

The mould used to produce the test mouldings was an aluminium box mould of base 300 mm x 300 mm with a draft angle of 3° included to facilitate demoulding. To enable shrinkage analysis, the hypothenuse distance of the grid at the bottom of the mould was measured to be 169.9 mm.

The samples for all three resins were prepared under the same processing conditions and reached approximately the same peak internal air temperature of 200°C. The cycle times for the 3 resins are displayed in Table II.

Shrinkage and warpage were measured on these samples as described below.

Mould shrinkage factors are measured by recording how much a moulded article dimension reduces after the moulding has cooled. The reduced dimension is related to a reference dimension taken from the actual mould. In the case of the box mould used in the present invention, the mould had a grid machined into the bottom of its cavity. The distance selected as the reference value was the hypothenuse distance of the grid at the bottom of the mould: it was measured to be 169.9 mm. The distance between the same two reference points was recorded on the cooled moulding and the percentage of shrinkage was then determined. The measuring apparatus consisted of a milling machine bed upon which the moulded article was placed. An electronic microscope was fixed onto movable axes positioned above the milling bed. Any movements of the axes, and subsequently of the microscope, were measured on an electronic meter so that the X and Y coordinates of movement could be obtained. Once the moulded article was positioned properly on the milling bed, the X and Y distances of the grid reproduced on the moulding could be measured and the diagonal distance between the selected grid points could be calculated and compared to the reference value of 169.9 mm, thereby allowing to calculate the percentage of shrinkage.

The amount of warpage on a moulded article was measured by using a dial gauge in conjonction with the apparatus described here-above for measuring the shrinkage.

The dial gauge pointer was placed above the centre of the grid and the milling machine bed was raised vertically so that a datum value could be set on the gauge. The milling bed was then moved so that the dial gauge sat on a point of the grid and a reading was made of how much the pointer rose or fell with respect to the datum value. This was repeated for all the points on the grid and the maximum warpage was defined as the largest deviation from the datum.

The results are also displayed in Table II.

**TABLE II**

| Material | Cycle time (s) | Shrink factor (%) | Warpage (mm) |
|---|---|---|---|
| R1 | 35.85 | 1.45 | 1.89 |
| R2 | 34.71 | 1.30 | 1.52 |
| R3 | 35.51 | 2.33 | 2.19 |

Impact measurements were carried out at room temperature for the average peak impact energy. The impact measurements were executed following the method of standard test ASTM 30-29. The results are displayed in Table III.

Flexural properties, represented by the flexural yield strength and the flexural modulus have been measured following respectively the methods of standard tests ASTM D-790 M. The results are also displayed in Table III.

**TABLE III**

| Material | Impact (J/mm) | Yield stress (Mpa) | Fl. Modulus (Mpa) |
|---|---|---|---|
| R1 | 5.87 | 13.3 | 380 |
| R2 | 4.25 | 13.6 | 353 |
| R3 | 7.93 | 12.4 | 588 |

Transmittance has been measured following the method of ASTM D 1003-00 for samples having a thickness of about 3 mm. The roto- moulded parts prepared with the syndiotactic polypropylene according to the present invention had a very high contact transparency as compared to those prepared with the reference polyethylene that all had a whitish appearance. Transmittance results are summarised in Table IV.

**TABLE IV**

| Material | Transmittance (%) | Thickness (mm) |
|---|---|---|
| R1 | 70.3 | 3.39 |
| R2 | 72.2 | 3.43 |
| R3 | 51.7 | 3.34 |

It is observed that the transmittance values of the rotomoulded parts prepared with syndiotactic polypropylene are much higher than those obtained with the reference polyethylene. The transparency could be further improved by optimising the grinding process conditions in order to avoid unmelted material and bubbles. This could be achieved for example by increasing the oven temperature or by pressurising the mould.

## Claims

1. Single layer articles produced by rotomoulding and consisting essentially of metallocene-produced syndiotactic polypropylene.

2. The single layer rotomoulded articles of claim 1 wherein the melt flow index is of from 3 to 40 g/10 min.

3. The single layer rotomoulded articles of claim 1 or claim 2 wherein the transmittance is larger than 60 %.

4. The single layer rotomoulded articles of any one of the preceding claims wherein the shrink factor is less than 2%.

5. The single layer rotomoulded articles of any one of the preceding claims wherein the impact strength is at least 4 J/mm.

6. The single layer rotomoulded articles of any one of the preceding claims wherein the flexural yield strength is at least 12.5 Mpa.

7. Use of a metallocene-produced polypropylene to prepare single layer rotomoulded articles having reduced warpage.
